# EUROPÄISCHE PATENTANMELDUNG

(11) **EP 3 285 125 A1**
(43) Veröffentlichungstag der Anmeldung: **21.02.2018**
(21) Anmeldenummer: 16184539.1
(22) Anmeldetag: 17.08.2016
(51) Int. Cl.: G05B 19/4093

(54) **ERZEUGUNG OPTIMIERTER BAHNDATEN FÜR EINE WERKZEUGMASCHINE**

(71) Anmelder: Siemens Aktiengesellschaft, 80333 München (DE)
(72) Erfinder: Armbrecht, Frank, 91099 Poxdorf (DE); Geissdörfer, Klaus, 91056 Erlangen (DE); Linke, Hartmut, 91056 Erlangen (DE); Puchtler, Thomas, 91325 Adelsdorf (DE); Bretschneider, Jochen, 73732 Esslingen (DE); Schäfers, Elmar, 90763 Fürth (DE)

(57) **Zusammenfassung**

Bei der Bearbeitung eines Werkstücks (8) mittels einer Werkzeugmaschine (1) sollen von der Werkzeugmaschine (1) auszuführende Bewegungsabläufe optimiert werden. Erfindungsgemäß werden hierzu für die Optimierung erforderliche Daten von der Steuerung auf eine externe Recheneinrichtung (5) übertragen und mittels dieser Daten in der Recheneinrichtung (5) optimierte Bahndaten ermittelt. Die optimierten Bahndaten werden danach auf die Werkzeugmaschine (1) rückübertragen und die Werkzeugmaschine (1) entsprechend gesteuert. Diese Vorgehensweise bietet den Vorteil, dass die Optimierung unter Berücksichtigung der Daten bezüglich der betreffenden Werkzeugmaschine (1) erfolgt und zur Optimierung keine Rechenleistung der Steuerung (3) beansprucht wird.

## Beschreibung

Die Erfindung betrifft ein Verfahren zur Erzeugung von Bahndaten bei der Abarbeitung eines Teileprogramms zur Bearbeitung eines Werkstücks mittels einer Werkzeugmaschine, wobei das Teileprogramm in einer Steuerung der Werkzeugmaschine abgearbeitet wird und wobei eine von dem Teileprogramm umfasste Programmanweisung aufgerufen wird, die die Erzeugung von Bahndaten nach sich zieht. Ferner betrifft die Erfindung ein System zur Durchführung eines derartigen Verfahrens.

Zur Bearbeitung eines Werkstücks mittels einer Werkzeugmaschine (Drehmaschine, Fräsmaschine, Schleifmaschine, Bohrmaschine, Roboter etc.) wird in einer Steuerung der Werkzeugmaschine ein Teileprogramm abgearbeitet, welches die Bewegungsabläufe eines Werkzeugs punktgenau steuert. Das Teileprogramm umfasst dabei eine Vielzahl an Programmanweisungen, die unterschiedliche Aktionen der Steuerung bzw. der Werkzeugmaschine auslösen können. So gibt es Programmanweisungen, die direkt punktgenau eine Relativ-Bewegung des Werkzeuges gegenüber dem Werkstück entlang einer vorbestimmten Bahn bewirken. Es gibt aber auch Programmanweisungen, die beispielsweise ein Unterprogramm, eine Nebenbewegung oder einen Zyklus aufrufen. Bei den zuletzt genannten werden in der Regel Parameter mit übergeben, durch die ein von der Werkzeugmaschine auszuführender Bearbeitungs- bzw. Bewegungsvorgang genauer spezifiziert wird. Beispielsweise werden der Steuerung durch das Teileprogramm beim Aufruf eines Taschen-Fräs-Zyklus Parameter zugeführt, die die genaue Position und Größe der zu fräsenden Tasche bestimmen. Infolge der Programmanweisung "Tasche fräsen" in Verbindung mit den entsprechenden Parametern generiert die Steuerung selbsttätig die erforderlichen Bahndaten zur Bewegung des Werkzeugs relativ zum Werkstück. Ein anderes Beispiel für eine Programmanweisung wäre der Aufruf einer Nebenbewegung, bei der der Steuerung lediglich der Anfangs- und der Endpunkt vorgegeben werden und für die die Steuerung entsprechende Bahndaten generiert, so dass das nicht mit dem Werkstück in Eingriff stehende Werkzeug kollisionsfrei von dem Anfangspunkt zu dem Endpunkt bewegt wird.

Insbesondere bei einer Serienfertigung ist es wichtig, dass die Bewegungsabläufe, die von der Werkzeugmaschine ausgeführt werden, optimiert sind, da nicht optimierte Bewegungsabläufe einen erheblichen Zeit- und damit Kostenfaktor bei der Herstellung eines Werkstücks darstellen können. Zur Steigerung der Maschinen-Produktivität lohnt sich daher - insbesondere in einer Serienfertigung - der Einsatz optimierter Bewegungsabläufe. Die Berechnung solcher optimierter Bewegungsabläufe erfolgt heute offline, d.h. außerhalb der Steuerung, da sie viel Rechenleistung kostet und sehr zeitaufwändig ist. Direkt an der Maschine vorgenommene Änderungen des Teileprogramms können bei dieser Vorgehensweise nicht in die Optimierung der Bewegungsabläufe einfließen. Dies stellt ein großes Hindernis bei der Erzeugung zeitoptimierter Bewegungsabläufe dar und beschränkt deren Einsatz auf die Großserienfertigung.

Aufgabe der vorliegenden Erfindung ist es daher, die Erzeugung von Bahndaten für eine Werkzeugmaschine zu verbessern.

Diese Aufgabe wird gelöst durch ein Verfahren mit den in Patentanspruch 1 angegebenen Schritten. Ferner wird die Aufgabe gelöst durch ein System mit den Merkmalen gemäß Patentanspruch 15.

Bei der Erfindung werden somit während der Abarbeitung eines Teileprogrammes durch eine numerische Steuerung - ausgelöst durch einen Aufruf einer bestimmten Programmanweisung in dem Teileprogramm - die Programmanweisung betreffende Daten sowie die Werkzeugmaschine betreffende Daten von der Steuerung auf eine nicht von der Steuerung umfasste Recheneinrichtung übertragen, zur Erzeugung optimierter Bahndaten unter Berücksichtigung der auf die Recheneinrichtung übertragenen Daten.

Die Erfindung hat den Vorteil, dass die Optimierung der Bahndaten unter Berücksichtigung von in der Steuerung vorliegender Daten erfolgt. Würde die Optimierung in einem CAM-System ohne Zugriff auf die jeweilige Steuerung einer konkreten Werkzeugmaschine erfolgen, so könnten bei dieser Optimierung nicht alle in der Steuerung vorhandenen Daten berücksichtigt werden, weil viele dieser Daten zunächst nur in der Steuerung vorliegen, z.B. manuell in die Steuerung eingegebene Änderungen eines Teileprogramms, Daten bezüglich eines in der Werkzeugmaschine verwendeten Werkzeugs, Daten bezüglich der aktuellen Aufspannsituation etc. Die Berücksichtigung all dieser Daten zur Optimierung von Bahndaten kann sehr zeit- und rechenintensiv sein. Vorteilhaft sieht die Erfindung vor, dass die Optimierung nicht in der Steuerung selbst erfolgt, sondern die zur Optimierung verwendeten Daten von der Steuerung auf eine Recheneinrichtung außerhalb der Steuerung übertragen werden. Bei dieser Recheneinrichtung kann es sich beispielsweise um ein der Werkzeugmaschine zugeordnetes Bediengerät oder um eine externe, d.h. nicht von der Werkzeugmaschine umfasste Recheneinrichtung handeln. Nachdem die Bahndaten in der Recheneinrichtung optimiert wurden, werden die optimierten Bahndaten von der Recheneinrichtung auf die Steuerung der Werkzeugmaschine zurück übertragen. Mittels der Steuerung kann dann gemäß den optimierten Bahndaten ein entsprechend optimierter Bewegungsablauf ausgeführt werden.

Beispiele für Programmanweisungen und damit einhergehende Bewegungsabläufe, bei denen eine erfindungsgemäße Optimierung vorteilhaft ist, sind (Aufrufe von) Nebenbewegungen, Unterprogramme oder Zyklen.

Beispielsweise beim Aufruf eines Taschen-Fräs-Zyklus zum Ausräumen einer sog. Tasche liegt im Teileprogramm in der Regel nur die Beschreibung des Randes der Tasche vor. Von der Steuerung werden dann durch Abarbeitung der in Art eines Unterprogrammes vorprogrammierten Anweisungen die zum Ausräumen der Tasche notwendigen Bearbeitungsbahnen unter Berücksichtigung der mit dem Aufruf des Zyklus übergebenen Parameter zur genauen Spezifizierung der Tasche berechnet und ausgeführt.

Beim Ausräumen einer Nut liegen i.d.R. die Mittellinie sowie die Nutbreite vor. Auch hier werden nach einem Aufruf einer entsprechenden Programmanweisung von einem speziell dafür ausgelegten Steuerungs-Zyklus die notwendigen Bearbeitungsbahnen berechnet und ausgeführt.

In beiden zuletzt genannten Anwendungsfällen lässt sich die Bearbeitungsbahn hinsichtlich verschiedener Kriterien optimieren. Dabei sind technologische Randbedingungen zu berücksichtigen wie z.B. der vom Werkzeughersteller vorgegebene, maximale Umschlingungswinkel des Materials um das Werkzeug oder das maximale Volumen, welches pro Zeiteinheit abgetragen werden kann. Überdies ist darauf zu achten, dass die generierte Bearbeitungsbahn nach Möglichkeit krümmungsstetig ist. Dies verringert starke Beschleunigungssprünge und sorgt somit für eine bessere Qualität am Werkstück sowie einen schonenden Umgang mit den Maschinenachsen und dem Werkzeug. Auch hier lässt sich zum Berechnen optimierter Bahndaten eine externe Recheneinheit einsetzen und vom Teileprogramm aus ansprechen.

Ein weiteres Beispiel einer Programmanweisung zum Aufruf eines Unterprogrammes bzw. eines Zyklus betrifft das Unrundschleifen von Nocken. Dabei wird von einer Schleifscheibe vom Rohteil Material abgetragen bis die endgültige Kontur erreicht ist. Die von einer Schleifmaschine auszuführende Bearbeitungsbahn ist spiralförmig und hängt von verschiedenen Parametern, z.B. dem Abtrag pro Umdrehung ab. Auch hier ist es wegen der höheren Ansprüche an die Bearbeitungsqualität sehr wichtig, dass die Bahn krümmungsstetig ist, da ansonsten nicht krümmungsstetige Übergänge zwischen Bearbeitungssätzen Marken auf dem Werkstück hinterlassen können. Auch hier lässt sich zum Bestimmen der aus technologischer Sicht optimalen Bahndaten eine externe Recheneinheit ansprechen.

Bei einer bevorzugten Ausführungsform der Erfindung wird bei einem Aufruf einer Programmanweisung in einem Teileprogramm zunächst überprüft, ob bereits eine Optimierung für den durch die Programmanweisung ausgelösten Bewegungsablauf bzw. die damit verbundenen Bahndaten durchgeführt wurde und, wenn dies der Fall ist, ob diese Optimierung noch aktuell ist. Liegt bereits eine aktuelle und optimierte Form der betreffenden Bahndaten vor, so kann die Programmanweisung direkt ausgeführt werden und es ist keine erneute Optimierung erforderlich. Anders hingegen, wenn festgestellt wird, dass keine Optimierung vorliegt oder die Optimierung nicht mehr aktuell ist. Dann wird erfindungsgemäß eine Optimierung der betreffenden Bahndaten außerhalb der Steuerung durchgeführt.

Die Bearbeitung von Werkstücken wird dabei vorteilhaft in der geschilderten Weise optimiert, bis alle bei der Bearbeitung des Werkstücks auszuführenden Bewegungsabläufe optimiert sind. Für den Fall, dass keine Optimierung bzw. keine aktuelle Optimierung für eine bestimmte auszuführende Programmanweisung bzw. einen bestimmten auszuführenden Bewegungsablauf vorliegt, bestehen zwei Möglichkeiten in Bezug auf die weitere Abarbeitung des Teileprogramms. Einerseits kann das Teileprogramm weiter abgearbeitet werden, indem die Steuerung die nicht optimierte bzw. die nicht aktuellen Bahndaten abarbeitet und parallel dazu die Optimierung der Bahndaten auf der Recheneinrichtung außerhalb der Steuerung erfolgt. Die optimierten Bahndaten werden dann erst bei dem nächsten Aufruf der betreffenden Programmanweisung zur Bewegung des Werkzeugs relativ zu dem Werkstück durch die Steuerung herangezogen. Diese Variante bietet den Vorteil, dass die Steuerung mit der Ausführung der Programmanweisung nicht so lange warten muss, bis die Optimierung vorliegt. Andererseits kann jedoch auch die Abarbeitung des Teileprogramms so lange unterbrochen sein, bis optimierte Bahndaten vorliegen und sogleich ein entsprechend optimierter Bewegungsablauf durch die Steuerung ausgeführt werden. Diese Variante bietet den Vorteil, dass die Steuerung bzw. die Werkzeugmaschine stets optimierte Bewegungsabläufe ausführt.

Bei einer besonders bevorzugten Ausführungsform der Erfindung werden die Bahndaten hinsichtlich der durch die Bahndaten festgelegten Bahnverläufe optimiert. Dies kann beispielsweise bedeuten, dass für eine Nebenbewegung von einem Punkt A zu einem Punkt B zumindest im Wesentlichen die kürzeste Verbindung ermittelt wird, wobei selbstverständlich zur Vermeidung von Kollisionen Hindernisse umfahren werden. Neben der reinen Wegstrecke kann jedoch auch eine Vielzahl weiterer Parameter bei der Optimierung einer Nebenbewegung berücksichtigt werden. So kann die Bewegungsbahn vorteilhaft derart bestimmt werden, dass die Bewegung von dem Startpunkt A zu dem Zielpunkt B in der kürzest möglichen Zeitdauer bewerkstelligt wird. Diese Optimierung erfolgt unter Berücksichtigung einer Vielzahl von Daten der betreffenden Werkzeugmaschine, beispielsweise der maximalen Geschwindigkeiten, Beschleunigungen oder Rucke einzelner Achsen der Werkzeugmaschine.

Eine weitere Optimierung bei der Erzeugung von Bahndaten könnte einen besonders niedrigen Energieverbrauch zum Ziel haben. Die Optimierung kann auch derart erfolgen, dass diese für mehrere Parameter zugleich erfolgt, zum Beispiel für eine Optimierung hinsichtlich der Bearbeitungszeit und gleichzeitig hinsichtlich des Energieverbrauchs. Es wird somit nach einer Optimierung gesucht, bei der die Gesamtheit aller Parameter, hinsichtlich derer optimiert wird, ein Optimum erreicht.

Vorteilhaft wird ein bestimmter Bewegungsablauf nicht nur hinsichtlich des Bahnverlaufs, sondern auch hinsichtlich der Trajektorie optimiert. Somit sind in Bezug auf den Bewegungsablauf nicht nur die einzelnen Bahnpunkte festgelegt, sondern auch die Zeitpunkte, in denen sich diese Bahnpunkte in Bezug auf eine bestimmte Referenzzeit, beispielsweise den Beginn des betreffenden Bewegungsablaufs, einstellen.

Die Optimierung des Bewegungsablaufs kann umso besser gelingen, je mehr aktuelle Daten aus der Steuerung der Werkzeugmaschine auf die Recheneinrichtung übertragen und bei der Optimierung berücksichtigt werden. Diese Daten können insbesondere Maschinendaten der Werkzeugmaschine, Werkzeugdaten, Positionsdaten eines aktuell verwendeten Werkzeugs, Positionsdaten des zu verarbeitenden Werkstücks, Positionsdaten bestimmter markanter Punkte des Werkstücks (Ecken, Kanten, Bohrlöcher etc.), Daten bezüglich Vorrichtungen zur Halterung des Werkstückes wie Schraubstöcke oder Spannmittel, usw. umfassen. Es ist gerade der Vorteil der Erfindung, dass hier, im Gegensatz zu einer Optimierung von Bahndaten in einem CAM-System, die aktuell in der Steuerung der betreffenden Werkzeugmaschine vorliegenden Daten in die Optimierung mit einbezogen werden. Die Optimierung gelingt somit wesentlich genauer und besser als bei einer Vorabbestimmung der Bahndaten in einem CAM-System.

Um die Steuerung der Werkzeugmaschine nicht mit einer zeit- und rechenintensiven Optimierung der Bahndaten zu belasten, sieht die Erfindung vor, diese Tätigkeit auf eine Recheneinrichtung außerhalb der Steuerung zu verlagern. Beispielsweise kann hierfür die Recheneinrichtung eines von der Werkzeugmaschine umfassten Bediengeräts verwendet werden. Eine andere Ausführungsform der Erfindung sieht vor, dass die Optimierung auf eine aus Sicht der Werkzeugmaschine externe Recheneinrichtung übertragen wird. Dies hat den Vorteil, dass dadurch die benötigte Rechenleistung einfach an den jeweiligen Rechenaufwand angepasst werden kann. Es wäre sogar denkbar, die zur Optimierung notwendige Rechenleistung aus der Cloud abzurufen. Der Betreiber der Werkzeugmaschine müsste dann für die Optimierung keine eigene Rechenleistung vorhalten.

Bei einer Ausführungsform der Erfindung ist vorgesehen, dass zumindest bei bestimmten Programmanweisungen stets eine Überprüfung erfolgt, ob optimierte und aktuelle Bahndaten vorliegen und - sofern dies nicht der Fall ist - eine Optimierung in der oben geschilderten Weise erfolgt.

Bei einer bevorzugten Ausführungsform der Erfindung erfolgt nicht nur der Aufruf von Programmanweisungen aus dem Teileprogramm heraus, sondern auch die Abfrage bezüglich des Vorhandenseins aktueller und optimierter Bahndaten in Bezug auf die betreffende Programmanweisung oder der Aufruf zur Durchführung der Optimierung, sofern keine aktuellen und optimierten Bahndaten vorliegen, wird durch eine entsprechende, spezielle Anweisung aus dem Teileprogramm heraus initiiert. Dadurch hat es der Ersteller des Teileprogramms selbst in der Hand, für welche Bewegungsabläufe er eine erfindungsgemäße Optimierung vorsieht. Beispielsweise könnte hierzu an die Programmanweisung zur Ausführung eines Zyklus, der ggf. optimiert werden soll, die Endung "_opt" angehängt werden. Eine entsprechende Programmanweisung in dem Teileprogramm würde dann beispielsweise "G81_opt" lauten. Nur bei derartigen, speziellen Programmanweisungen würde dann eine Überprüfung des Vorhandenseins optimierter Bahndaten bzw. die Optimierung der Bahndaten ausgelöst.

Die Erfindung wird nachfolgend anhand von Ausführungsbeispielen erläutert. Dabei zeigen:
- FIG 1: ein System zur Durchführung eines erfindungsgemäßen Verfahrens im stark vereinfachten Blockschaltbild,
- FIG 2 und 3: unterschiedliche Ablaufschemen zur Herbeiführung optimierter Nebenbewegungen.

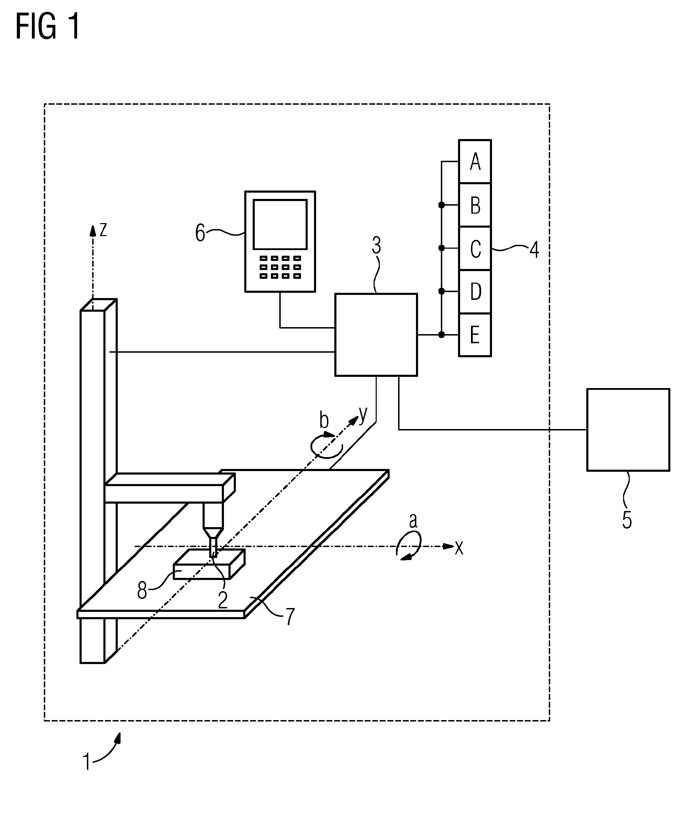

Figur 1 zeigt in schematischer, stark vereinfachter Darstellung eine Werkzeugmaschine 1, bei der ein Werkzeug 2 mittels der Linearachsen x, y und z sowie der Rundachsen a und b relativ zu einem Werkstück 8 im Raum positionier- und schwenkbar ist. Die Einstellung bestimmter Achswerte erfolgt durch die Steuerung 3. Weiterhin umfasst die Werkzeugmaschine 1 eine Bedieneinrichtung 6, mittels der bestimmte Parameter und Einstellungen aus der Steuerung 3 ausgelesen und an einem Display der Bedieneinrichtung 6 angezeigt werden können. Weiterhin können über an der Bedieneinrichtung 6 angeordnete Tasten von einem Benutzer manuelle Einstellungen vorgenommen werden, die sich auf die Steuerung 3 auswirken.

Zur Ausübung ihrer Steuerfunktion ist die Steuerung 3 mit einem Speicher 4 verbunden, in dem eine Vielzahl unterschiedlicher Daten gespeichert ist. So umfasst der Speicher 4 einen Speicherbereich A zur Speicherung wenigstens eines von der Steuerung 3 abarbeitbaren Teileprogramms. Weiterhin ist ein Speicherbereich B vorhanden zur Speicherung von die Werkzeugmaschine 1 betreffenden Maschinendaten, z.B. bezüglich der Anzahl und Ausrichtung der Achsen, der maximalen Verfahrwege der Achsen, der maximalen Geschwindigkeiten, Beschleunigungen und Rucke der einzelnen Achsen etc. In einem Speicherbereich C sind Daten bezüglich wenigstens eines von der Werkzeugmaschine 1 verwendeten Werkzeugs 2 hinterlegt, beispielsweise Länge des Werkzeugs, Durchmesser des Werkzeugs, Solldrehzahl etc.. Weiterhin sind in einem Speicherbereich D Daten bezüglich eines mit der Werkzeugmaschine 1 zu bearbeitenden Werkstücks 5 hinterlegt. Die Werkstückdaten umfassen insbesondere die Daten bezüglich des unverarbeiteten Rohteils sowie die Geometriedaten des fertigen Werkstücks 8. Neben den genannten Speicherbereichen kann der Speicher 4 noch eine Vielzahl weiterer Speicherbereiche zur Speicherung weiterer, unterschiedlicher Arten von Daten umfassen. Zum Beispiel kann ein Speicherbereich E vorhanden sein, in den Daten bezüglich der Aufspannung des Werkstücks 8 in der Werkzeugmaschine 1 hinterlegt sind.

Bei der Abarbeitung eines Teileprogramms mittels der Werkzeugmaschine 1 unterscheidet man grob zwei unterschiedliche Arten von Bewegungen, die bei der Abarbeitung des Teileprogramms von dem Werkzeug 2 ausgeführt werden. Einerseits sind dies Bewegungen zur eigentlichen Bearbeitung des Werkstücks 8, bei denen sich das Werkzeug 2 und das Werkstück 8 berühren, das Werkzeug 2 also in Eingriff steht. Daneben gibt es Bewegungen, die keine Veränderung des Werkstücks 8 verursachen und bei denen sich das Werkzeug 2 nicht in Eingriff mit dem Werkstück 8 befindet. Letztere werden als Nebenbewegungen bezeichnet und dienen beispielsweise dazu, das Werkzeug 2 neu zu positionieren oder das Werkzeug 2 in ein Werkzeugmagazin zu transportieren und gegen ein anderes Werkzeug auszutauschen. Insbesondere in der Serienfertigung stellen diese Nebenbewegungen und insbesondere die dafür benötigten Nebenzeiten, in denen die Werkzeugmaschine unproduktiv ist, einen erheblichen Kostenfaktor dar. Es ist daher im Interesse eines Betreibers der Werkzeugmaschine 1, diese Nebenzeiten zu minimieren. Da die zur Minimierung der Nebenzeiten erforderliche Optimierung der Nebenbewegungen mitunter sehr rechenintensiv sein kann, sieht die Erfindung vor, die Optimierung in einer externen Recheneinrichtung 5 durchzuführen. Hierzu werden alle für die Optimierung benötigten Daten, insbesondere die in den Speicherbereichen A bis E des Speichers 4 hinterlegten Daten, über die Steuereinrichtung 3 ausgelesen und auf die externe Recheneinrichtung 5 übertragen. Die Recheneinrichtung 5 ermittelt dann für wenigstens eine bestimmte Nebenbewegung einen optimierten Bahnverlauf für diese Bewegung. Die Optimierung erfolgt dabei vorzugsweise hinsichtlich der für die Bewegung benötigten Zeitdauer. Es können jedoch auch andere Parameter in Bezug auf die Nebenbewegung optimiert werden, z.B. der für eine bestimmte Nebenbewegung erforderliche Energieaufwand. Nach Abschluss der Optimierung der Nebenbewegung in der externen Recheneinrichtung 5 werden Daten bezüglich der optimierten Nebenbewegung von der Recheneinrichtung 5 auf die Steuerung 3 übertragen und von dort vorteilhaft in dem Speicher 4 hinterlegt. Bei einem Aufruf der Nebenbewegung wird dann die wie oben beschrieben optimierte Nebenbewegung von der Steuerung 3 abgearbeitet und von der Werkzeugmaschine 1 ausgeführt.

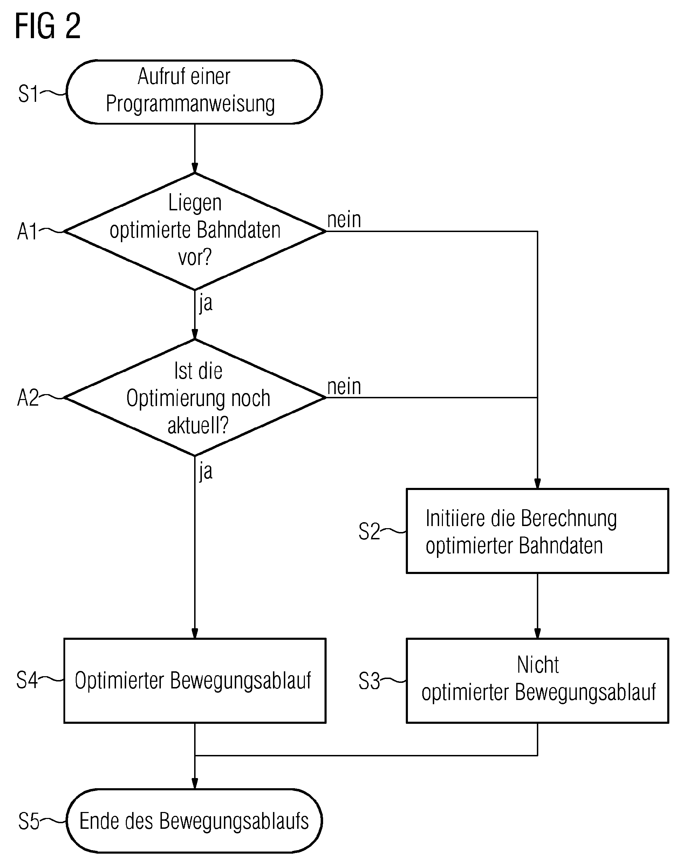

Bei dem erfindungsgemäßen Verfahrensablauf gemäß Figur 2 wird zunächst in einem Schritt S1 aus einem Teileprogramm heraus eine Programmanweisung aufgerufen. Erfindungsgemäß wird diese nicht sofort von der Steuerung der betreffenden Werkzeugmaschine ausgeführt, sondern es erfolgt erst eine Abfrage A1, ob für die aufgerufene Programmanweisung bereits optimierte Bahndaten vorliegen. Liegen keine optimierten Bahndaten vor, so werden in einem Schritt S2 in Bezug auf die Optimierung der betreffenden Programmanweisung relevante Daten aus der Steuerung ausgelesen und ggf. zusammen mit den nicht optimierten Bahndaten auf eine externe Recheneinrichtung übertragen. Das Gleiche geschieht für den Fall, dass zwar eine Optimierung der betreffenden Bahndaten durchgeführt wurde, diese jedoch nicht mehr aktuell ist, beispielsweise weil in der Zwischenzeit die Programmanweisung betreffende Parameter manuell an der Steuerung geändert wurden. Hierfür ist im Ablaufschema die zweite Abfrage A2 vorgesehen. Mit den auf die externe Recheneinrichtung übertragenen Daten erfolgt durch die externe Recheneinrichtung eine Optimierung der betreffenden Bahndaten. Gleichzeitig wird durch die Steuerung der nicht optimierte Bewegungsablauf in einem Schritt S3 ausgeführt. Dies bedeutet, dass beim erstmaligen Aufruf der Programmanweisung noch die nicht optimierte Version ausgeführt wird, wodurch die Steuerung nicht auf das Ergebnis der Optimierung warten muss. Stellt sich hingegen bei der Abfrage A2 heraus, dass eine optimierte und aktuelle Version der Bahndaten vorliegt, so wird der entsprechende Bewegungsablauf in einem Schritt S4 ausgeführt. Schließlich wird der Bewegungsablauf in einem Schritt S5 beendet und das Teileprogramm an der entsprechenden Stelle fortgesetzt.

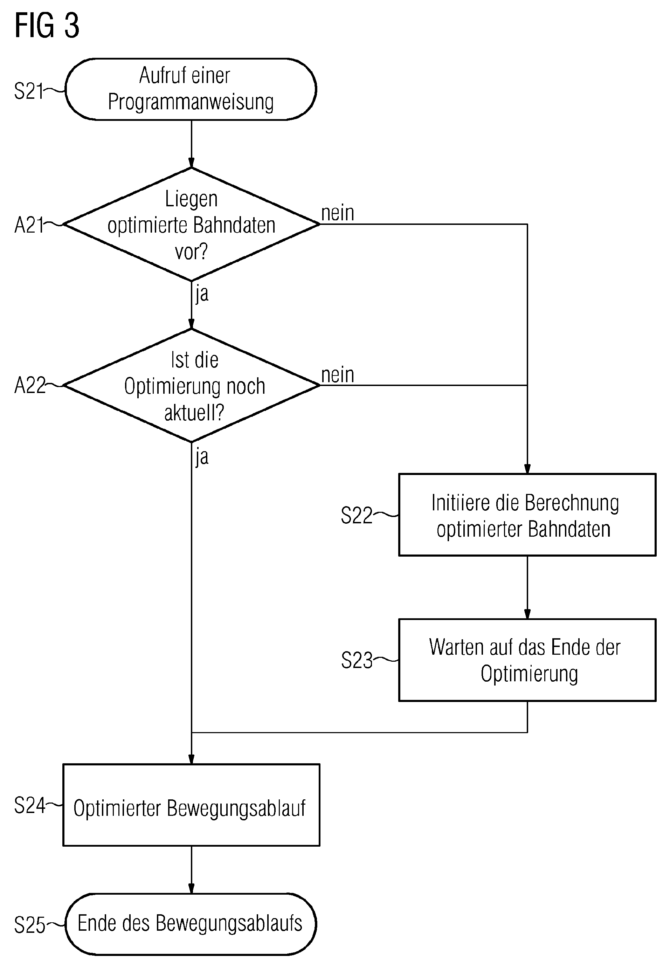

Eine alternative Ausführungsform eines erfindungsgemäßen Ablaufs zeigt Figur 3. Auch hier erfolgt nach einem Aufruf einer Programmanweisung in einem Schritt S21 zunächst eine Abfrage A21 dahingehend, ob bereits eine optimierte Version der der Programmanweisung zugeordneten Bahndaten vorliegt. Ist dies nicht der Fall, so wird in einem Verfahrensschritt S22, wie in der Beschreibung zu Figur 2 geschildert, eine Optimierung der Bahndaten auf einer externen Recheneinrichtung durchgeführt. Im Unterschied zum Ablauf gemäß Figur 2 erfolgt bei der Variante gemäß Figur 3 jedoch keine Ausführung des nicht optimierten Bewegungsablaufes, sondern es wird zunächst in einem Schritt S23 auf das Ende der durch die externe Recheneinrichtung ausgeführten Optimierung gewartet. Ist die Optimierung durch die externe Recheneinrichtung beendet und sind entsprechend optimierte Bahndaten bezüglich der Programmanweisung von der externen Recheneinrichtung auf die Steuerung rückübertragen, so erfolgt in einem nachfolgenden Verfahrensschritt S24 die Ausführung des optimierten Bewegungsablaufes mittels der Steuerung der Werkzeugmaschine. Nach Beendigung des Bewegungsablaufes in Schritt S25 wird auch hier das Teileprogramm an der entsprechenden Stelle fortgesetzt.

## Patentansprüche

1. Verfahren zur Erzeugung von Bahndaten bei der Abarbeitung eines Teileprogramms zur Bearbeitung eines Werkstücks (8) mittels einer Werkzeugmaschine (1),
- wobei das Teileprogramm in einer Steuerung (3) der Werkzeugmaschine (1) abgearbeitet wird,
- wobei eine von dem Teileprogramm umfasste Programmanweisung aufgerufen wird, die die Erzeugung von Bahndaten nach sich zieht,
- wobei die Programmanweisung betreffende Daten sowie die Werkzeugmaschine (1) betreffende Daten von der Steuerung (3) auf eine nicht von der Steuerung (3) umfasste Recheneinrichtung (5) übertragen werden zur Erzeugung optimierter Bahndaten unter Berücksichtigung der auf die Recheneinrichtung (5) übertragenen Daten,
- wobei die optimierten Bahndaten von der Recheneinrichtung (5) auf die Steuerung (3) der Werkzeugmaschine (1) übertragen werden und
- wobei von der Werkzeugmaschine (1) eine Bewegung gemäß den optimierten Bahndaten ausgeführt wird.

2. Verfahren nach Anspruch 1, wobei vor der Erzeugung optimierter Bahndaten überprüft wird, ob in Bezug auf die Programmanweisung bereits optimierte Bahndaten vorliegen und ob im Falle des Vorhandenseins optimierter Bahndaten diese aktuell sind, wobei optimierte Bahndaten nur dann erzeugt werden, wenn keine oder keine aktuellen optimierten Bahndaten vorhanden sind.

3. Verfahren nach einem der vorherigen Ansprüche, wobei die optimierten Bahndaten in einem der Steuerung (3) zugeordneten Speicher (4) gespeichert werden und bei einem erneuten Aufruf der betreffenden Programmanweisung aus dem Speicher (4) ausgelesen und von der Steuereinrichtung (3) abgearbeitet werden.

4. Verfahren nach einem der vorherigen Ansprüche, wobei während der Erzeugung optimierter Bahndaten von der Steuerung (3) nicht optimierte Bahndaten erzeugt werden und die Werkzeugmaschine (1) gemäß den nicht optimierten Bahndaten gesteuert wird.

5. Verfahren nach einem der vorherigen Ansprüche, wobei die Programmanweisung erst dann ausgeführt wird, wenn optimierte Bahndaten in der Steuerung (3) vorliegen.

6. Verfahren nach einem der vorherigen Ansprüche, wobei die Bahndaten hinsichtlich dadurch festgelegter Bahnverläufe optimiert werden.

7. Verfahren nach einem der vorherigen Ansprüche, wobei die Bahndaten hinsichtlich dadurch festgelegter Trajektorien optimiert werden.

8. Verfahren nach einem der vorherigen Ansprüche, wobei durch die Programmanweisung eine Nebenbewegung aufgerufen wird.

9. Verfahren nach einem der vorherigen Ansprüche, wobei durch die Programmanweisung ein Zyklus aufgerufen wird.

10. Verfahren nach einem der vorherigen Ansprüche, wobei durch die Programmanweisung ein Unterprogramm aufgerufen wird.

11. Verfahren nach einem der vorherigen Ansprüche, wobei ein Überprüfung des Vorliegens optimierter Bahndaten und/oder ein Aufruf zur Optimierung der Bahndaten jeweils durch eine spezielle Programmanweisung aus dem Teileprogramm heraus erfolgt.

12. Verfahren nach einem der vorherigen Ansprüche, wobei die Daten bezüglich der Werkzeugmaschine (1) Maschinendaten und/oder Werkzeugdaten und/oder Positionsdaten eines Werkzeugs (2) und/oder Positionsdaten des Werkstücks (8) und/oder Positionsdaten bestimmter markanter Punkte des Werkstücks (8) und/oder Daten bezüglich Spannmitteln der Werkzeugmaschine (1) umfassen.

13. Verfahren nach einem der vorherigen Ansprüche, wobei es sich bei der Recheneinrichtung (5) um eine aus Sicht der Werkzeugmaschine (1) externe Recheneinrichtung (5), die nicht Teil der Werkzeugmaschine (1) ist, handelt.

14. Verfahren nach einem der vorherigen Ansprüche, wobei es sich bei der Recheneinrichtung (5) um eine von der Werkzeugmaschine (1) umfasste Bedieneinrichtung (6) der Werkzeugmaschine (1) handelt.

15. System, umfassend eine Werkzeugmaschine (1) mit einer Steuerung (3) sowie einer nicht von der Steuerung (3) umfassten Recheneinrichtung (5), ausgebildet zur Durchführung eines Verfahrens nach einem der vorherigen Ansprüche.
